# EUROPEAN PATENT APPLICATION

(11) **EP 4 793 650 A2**
(43) Date of publication of application: **19.08.2026**
(21) Application number: 25223096.6
(22) Date of filing: 12.12.2025
(51) Int. Cl.: G01N 35/10, B01L 3/02

(54) **LIQUID HANDLING SYSTEM AND METHOD**

(30) Priority: 05.02.2025 IN 202521009403
(71) Applicant: Tata Consultancy Services Limited, Mumbai, Maharashtra 400 021 (IN)
(72) Inventor: SAINI, Parvesh, 411057 Pune, Maharashtra (IN); MAITI, Soumyadipta, 411057 Pune, Maharashtra (IN); RAI, Beena, Pittsburgh, Pennsylvania, 15213 (US)
(74) Representative: Goddar, Heinz J.

(57) **Abstract**

Conventionally, to automate these laboratory tasks, a robotic device has been used which is not enough as the sequence of actions like pipetting and dipping are more complex than just having grasping capabilities. Present disclosure provides a liquid handling system (LHS) and a method that determines quantity for formulation to be prepared using liquids associated with recipe. An error between a set point and actual volume of the liquids is calculated for determined motor speed to generate torque and rotational motion that are used to generate a linear motion for movement of one or more plungers associated with one or more syringes mounted to the LHS. The movement of plungers enables aspiration and dispensation of the liquids by the LHS at a required amount for preparing the quantity of the formulation using the viscosity of the liquids.

## Description

### CROSS-REFERENCE TO RELATED APPLICATIONS AND PRIORITY

The present application claims priority to Indian application no. 202521009403, filed on February 05, 2025.

### TECHNICAL FIELD

The disclosure herein generally relates to liquid handling techniques, and, more particularly, to a liquid handling system and method.

### BACKGROUND

With the rise of digital systems, the world is adopting automation in every area possible, as it is reducing the time and cost of conducting most tasks and that too with better accuracy. All this is possible because without a human in a loop these systems can run 24x7 with little maintenance and cost compared to a human. Even with this widescale adoption, one can still argue that these technologies are not utilized to their full potential, especially in a laboratory environment, where they are used in data handling, but the majority of the tasks of actual experimentation are still being done by a human operator. To automate these laboratory tasks, just having a robotic device is not enough as the sequence of actions like pipetting and dipping are more complex than just having grasping capabilities.

### SUMMARY

Embodiments of the present disclosure present technological improvements as solutions to one or more of the above-mentioned technical problems recognized by the inventors in conventional systems.

For example, in one aspect, there is provided a processor implemented method for handling liquids. The method comprises obtaining, at a central node of a liquid handling system (LHS), an input data comprising a recipe for a formulation, and one or more liquids; determining, by the central node, quantity of the formulation to be prepared using the one or more liquids associated with the recipe; calculating, by using a liquid volume calculator, viscosity and an actual volume of the one or more liquids required for preparing the formulation based on an associated ingredient concentration; calculating, by using a controller, (i) viscosity and an actual volume of the one or more liquids required for preparing the formulation based on an associated ingredient concentration, by using a liquid volume calculator, (ii) an error between a set point and the actual volume of the one or more liquids based on a current position of the LHS, and (iii) determine a set speed for a motor based on the calculated error; generating a voltage signal for the motor specific to the set speed for movement of the motor, wherein the motor is configured to serve as a driver for a gear box; generating, by the gear box, torque and rotational motion based on a driving input received from the motor, and transmitting the generated torque and rotational motion to an idler gear using a first gear profile, wherein the driving input is generated using the voltage signal; and generating, by using the idler gear having a second gear profile meshed with a profiled rack, a linear motion using the generated torque and rotational motion for movement of one or more plungers associated with one or more syringes mounted to the LHS, wherein the movement of one or more plungers enable aspiration and dispensing of the one or more liquids by the LHS at a required amount for preparing the quantity of the formulation using the viscosity of the one or more liquids.

In an embodiment, the linear motion is proportional to the actual volume of the one or more liquids.

In an embodiment, a potentiometer is operatively connected to the LHS and is configured to (i) receive an angular movement specific to the linear movement of the one or more plungers, and (ii) generate a proportional voltage value specific to a linear position of the one or more plungers by using a calibration parameter, and wherein the proportional voltage value specific to the linear position of the one or more plungers is read by the controller as a feedback signal.

In an embodiment, one or more updated errors are estimated using the feedback signal for determining one or more updated set speeds and one or more subsequent linear positions of the one or more plungers that enable further aspiration and dispensing of the one or more liquids.

In an embodiment, the one or more plungers comprises a plurality of cavities that are configured to house a plurality of profiled racks, wherein a first profiled rack is configured to drive the one or more plungers, and at least one second profiled rack is configured to provide the feedback signal.

In another aspect, there is provided a liquid handling system. The system comprises: a memory storing instructions; one or more communication interfaces; a central node configured to obtain an input data comprising a recipe for a formulation, and one or more liquids and determine quantity of the formulation to be prepared using the one or more liquids associated with the recipe; a liquid volume calculator configured to calculate viscosity and an actual volume of the one or more liquids required for preparing the formulation based on an associated ingredient concentration; a controller configured to (i) viscosity and an actual volume of the one or more liquids required for preparing the formulation based on an associated ingredient concentration, by using a liquid volume calculator, (ii) an error between a set point and the actual volume of the one or more liquids based on a current position of the LHS, and (iii) determine a set speed for a motor based on the calculated error; a motor configured to generate a voltage signal specific to the set speed for movement of the motor, wherein the motor is configured to serve as a driver for a gear box, wherein the gear box is configured to generate torque and rotational motion based on a driving input received from the motor, and transmit the generated torque and rotational motion to an idler gear using a first gear profile, wherein the driving input is generated using the voltage signal, wherein the idler gear further comprises a second gear profile meshed with a profiled rack and is configured to generate a linear motion using the generated torque and rotational motion for movement of one or more plungers associated with one or more syringes mounted to the LHS, wherein the movement of one or more plungers enable aspiration and dispensing of the one or more liquids by the LHS at a required amount for preparing the quantity of the formulation using the viscosity of the one or more liquids.

In an embodiment, the linear motion is proportional to the actual volume of the one or more liquids.

In an embodiment, a potentiometer is operatively connected to the LHS and is configured to (i) receive an angular movement specific to the linear movement of the one or more plungers, and (ii) generate a proportional voltage value specific to a linear position of the one or more plungers by using a calibration parameter, and wherein the proportional voltage value specific to the linear position of the one or more plungers is read by the controller as a feedback signal.

In an embodiment, one or more updated errors are estimated using the feedback signal for determining one or more updated set speeds and one or more subsequent linear positions of the one or more plungers that enable further aspiration and dispensing of the one or more liquids.

In an embodiment, the one or more plungers comprises a plurality of cavities that are configured to house a plurality of profiled racks, wherein a first profiled rack is configured to drive the one or more plungers, and at least one second profiled rack is configured to provide the feedback signal.

In yet another aspect, there are provided one or more non-transitory machine-readable information storage mediums comprising one or more instructions which when executed by one or more hardware processors cause handling liquids by obtaining, at a central node of a liquid handling system (LHS), an input data comprising a recipe for a formulation, and one or more liquids; determining, by the central node, quantity of the formulation to be prepared using the one or more liquids associated with the recipe; calculating, by a controller, (i) viscosity and an actual volume of the one or more liquids required for preparing the formulation based on an associated ingredient concentration, by using a liquid volume calculator, (ii) an error between a set point and the actual volume of the one or more liquids based on a current position of the LHS, and (iii) determine a set speed for a motor based on the calculated error; generating a voltage signal for the motor specific to the set speed for movement of the motor, wherein the motor is configured to serve as a driver for a gear box; generating, by the gear box, torque and rotational motion based on a driving input received from the motor, and transmitting the generated torque and rotational motion to an idler gear using a first gear profile, wherein the driving input is generated using the voltage signal; and generating, by using the idler gear having a second gear profile meshed with a profiled rack, a linear motion using the generated torque and rotational motion for movement of one or more plungers associated with one or more syringes mounted to the LHS, wherein the movement of one or more plungers enable aspiration and dispensing of the one or more liquids by the LHS at a required amount for preparing the quantity of the formulation using the viscosity of the one or more liquids.

In an embodiment, the linear motion is proportional to the actual volume of the one or more liquids.

In an embodiment, a potentiometer is operatively connected to the LHS and is configured to (i) receive an angular movement specific to the linear movement of the one or more plungers, and (ii) generate a proportional voltage value specific to a linear position of the one or more plungers by using a calibration parameter, and wherein the proportional voltage value specific to the linear position of the one or more plungers is read by the controller as a feedback signal.

In an embodiment, one or more updated errors are estimated using the feedback signal for determining one or more updated set speeds and one or more subsequent linear positions of the one or more plungers that enable further aspiration and dispensing of the one or more liquids.

In an embodiment, the one or more plungers comprises a plurality of cavities that are configured to house a plurality of profiled racks, wherein a first profiled rack is configured to drive the one or more plungers, and at least one second profiled rack is configured to provide the feedback signal.

In a further aspect, there is provided a device for handling liquids. The device comprises one or more plungers associated with one or more syringes mountable to a liquid handling system (LHS); and a motor configured to generate a voltage signal specific to a set speed for movement of the motor, wherein motor is configured to serve as a driver for a gear box, wherein the gear box is configured to generate torque and rotational motion based on a driving input received from the motor, and transmit the generated torque and rotational motion to an idler gear using a first gear profile, wherein the driving input is generated using the voltage signal, wherein the idler gear further comprises a second gear profile meshed with a profiled driving rack and is configured to generate a linear motion using the generated torque and rotational motion for movement of the one or more plungers associated with the one or more syringes mounted to the LHS, and wherein the movement of one or more plungers enable aspiration and dispensation of the one or more liquids by the LHS at a required amount for preparing the quantity of the formulation using the viscosity of the one or more liquids.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 depicts an exemplary liquid handling system, in accordance with an embodiment of the present disclosure.
FIG. 2 depicts an exemplary high level block diagram of the liquid handling system (LHS), in accordance with an embodiment of the present disclosure.
FIG. 3 depicts an exemplary flow chart illustrating a liquid handling method, using the systems of FIG. 1-2, in accordance with an embodiment of the present disclosure.
FIG. 4 depicts the LHS of FIGS. 1-2, in accordance with an embodiment of the present disclosure.
FIG. 5 depicts a motor comprised in the LHS of FIGS. 1-2, in accordance with an embodiment of the present disclosure.
FIG. 6 depicts the motor with a gear attached, in accordance with an embodiment of the present disclosure.
FIG. 7 depicts an idler gear attached to the motor and a corresponding motor gear, in accordance with an embodiment of the present disclosure.
FIG. 8 depicts an exemplary plunger fitted with rack with a helical impression along with other gears and the motor, in accordance with an embodiment of the present disclosure.
FIG. 9 depicts a view of the other side of the plunger with another rack for feedback to the potentiometer, in accordance with an embodiment of the present disclosure.
FIG. 10 depicts a potentiometer gear meshed with the feedback rack, in accordance with an embodiment of the present disclosure.
FIG. 11 depicts the potentiometer being attached with respective gear and rest of the gear assembly, in accordance with an embodiment of the present disclosure.
FIG. 12 depicts a view illustrating 'turn in place' geometry to fit body of the syringe on the bottom face of the gearbox, in accordance with an embodiment of the present disclosure.
FIG. 13 depicts a top face with hexagonal geometry to mount the motor using a hexagonal nut, in accordance with an embodiment of the present disclosure.
FIG. 14 depicts the potentiometer mounting orientation on the top face of the gearbox, in accordance with an embodiment of the present disclosure.
FIG. 15 is a graphical representation illustrating measured position of the plunger with different set step values which are 50 steps apart, in accordance with an embodiment of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

With the rise of digital systems, the world is adopting automation in every area possible, as it is reducing the time and cost of conducting most tasks and that too with better accuracy. All this is possible because without a human in a loop these systems can run 24x7 with little maintenance and cost compared to a human. Even with this widescale adoption, one can still argue that these technologies are not utilized to their full potential, especially in a laboratory environment, where they are used in data handling, but the majority of the tasks of actual experimentation are still being done by a human operator. To automate these laboratory tasks, just having a robotic device is not enough as the sequence of actions like pipetting and dipping are more complex than just having grasping capabilities.

Addressing one capability at a time in path to have a completely autonomous lab, system and method of the present disclosure focus on the liquid handling operation first, which is a critical capability in the lab and is mostly done by a human operator. The off-the-shelf bench top setups are available for liquid handling and are already being used by the pharmaceuticals and biotechnology industries. But these setups are limited by their capacity of handling liquids with viscosity close to water and the amount handled is in micro liters. These heavy bench top setups are also standalone machines which cannot be integrated into bigger setups for an autonomous laboratory.

To overcome these limitations of the existing solutions and to utilize the versatility of a robotic arm, the system and the method of the present disclosure selected an approach of having specialized robotic arm extensions for specific tasks. Here, the present disclosure provides a liquid handling system and method which meet the requirements of handling significant amounts of viscous liquids. Syringes are attached to the system for their capacity to handle a wide range of liquids and quick replacement which will not be possible with a custom-made syringe.

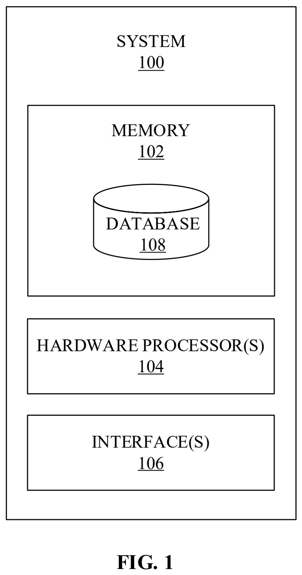

Referring now to the drawings, and more particularly to FIGS. 1 through 15, where similar reference characters denote corresponding features consistently throughout the figures, there are shown preferred embodiments and these embodiments are described in the context of the following exemplary system and/or method.

Reference numerals of one or more components of liquid monitoring system (LHS) 100 as depicted various figures are provided in Table 1 below for ease of description:

**Table 1**

| **Sl. No** | **Component** | **Numeral reference** |
|---|---|---|
| 1 | Liquid handling system (LHS) | 100 |
| 2 | Central node | 202 |
| 3 | Controller | 204 |
| 4 | Motor (DC Motor) | 206 |
| 5 | Gear box | 208 |
| 6 | Idler gear | 208A |
| 7 | First gear profile | 208A-1 |
| 8 | Second gear profile | 208A-2 |
| 9 | One or more plungers | 210 |
| 10 | Profiled driving racks | 210A |
| 11 | A plurality of cavities | 210B |
| 12 | Potentiometer | 212 |

FIG. 1 depicts an exemplary liquid handling system 100, in accordance with an embodiment of the present disclosure. In an embodiment, the system 100 includes one or more hardware processors 104, communication interface device(s) or input/output (I/O) interface(s) 106 (also referred as interface(s)), and one or more data storage devices or memory 102 operatively coupled to the one or more hardware processors 104. The one or more processors 104 may be one or more software processing components and/or hardware processors. In an embodiment, the hardware processors can be implemented as one or more microprocessors, microcomputers, microcontrollers, digital signal processors, central processing units, state machines, logic circuitries, and/or any devices that manipulate signals based on operational instructions. Among other capabilities, the processor(s) is/are configured to fetch and execute computer-readable instructions stored in the memory. In an embodiment, the system 100 can be implemented in a variety of computing systems, such as laptop computers, notebooks, hand-held devices (e.g., smartphones, tablet phones, mobile communication devices, and the like), workstations, mainframe computers, servers, a network cloud, and the like.

The I/O interface device(s) 106 can include a variety of software and hardware interfaces, for example, a web interface, a graphical user interface, and the like and can facilitate multiple communications within a wide variety of networks N/W and protocol types, including wired networks, for example, LAN, cable, etc., and wireless networks, such as WLAN, cellular, or satellite. In an embodiment, the I/O interface device(s) can include one or more ports for connecting a number of devices to one another or to another server.

The memory 102 may include any computer-readable medium known in the art including, for example, volatile memory, such as static random-access memory (SRAM) and dynamic-random access memory (DRAM), and/or non-volatile memory, such as read only memory (ROM), erasable programmable ROM, flash memories, hard disks, optical disks, and magnetic tapes. In an embodiment, a database 108 is comprised in the memory 102, wherein the database 108 comprises information pertaining to experimental set up, receipt of one or more formulations, one or more liquids, and the like. The memory 102 further comprises (or may further comprise) information pertaining to input(s)/output(s) of each step performed by the systems and methods of the present disclosure. In other words, input(s) fed at each step and output(s) generated at each step are comprised in the memory 102 and can be utilized in further processing and analysis.

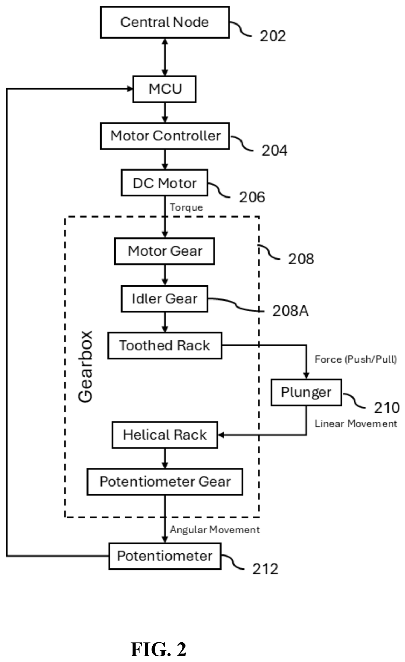

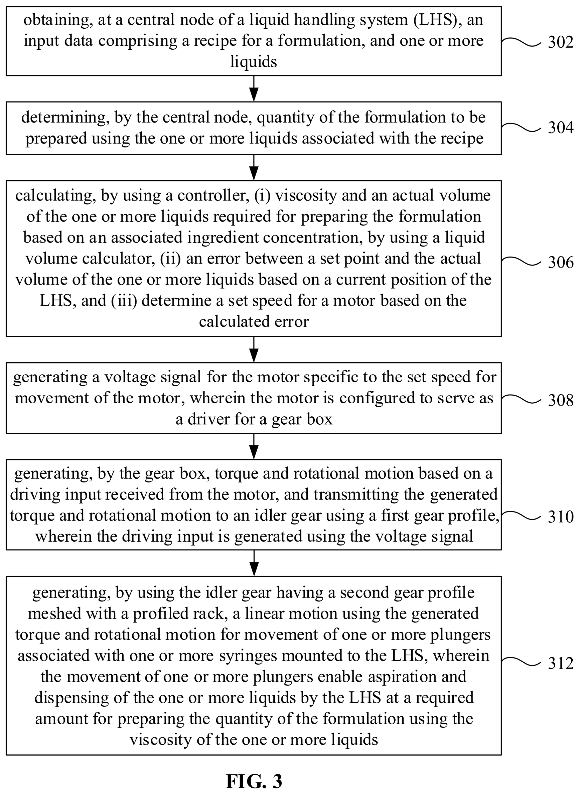

FIG. 2, with reference to FIG. 1, depicts an exemplary high level block diagram of the liquid handling system 100, in accordance with an embodiment of the present disclosure. Working of the system 100 in FIGS. 1-2 is explained with reference to the method 300 in FIG. 3.

FIG. 3, with reference to FIGS. 1-2, depicts an exemplary flow chart illustrating a liquid handling method, using the systems of FIG. 1-2, in accordance with an embodiment of the present disclosure. In an embodiment, the system(s) 100 comprises one or more data storage devices or the memory 102 operatively coupled to the one or more hardware processors 104 and is configured to store instructions for execution of steps of the method by the one or more processors 104. The steps of the method of the present disclosure will now be explained with reference to components of the system 100 of FIG. 1, the block diagram of the system 100 depicted in FIG. 2, and the flow diagram as depicted in FIG. 3. Although process steps, method steps, techniques or the like may be described in a sequential order, such processes, methods, and techniques may be configured to work in alternate orders. In other words, any sequence or order of steps that may be described does not necessarily indicate a requirement that the steps be performed in that order. The steps of processes described herein may be performed in any order practical. Further, some steps may be performed simultaneously.

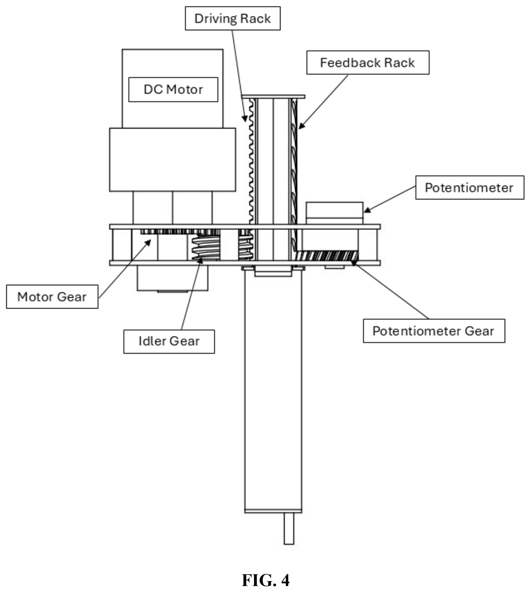

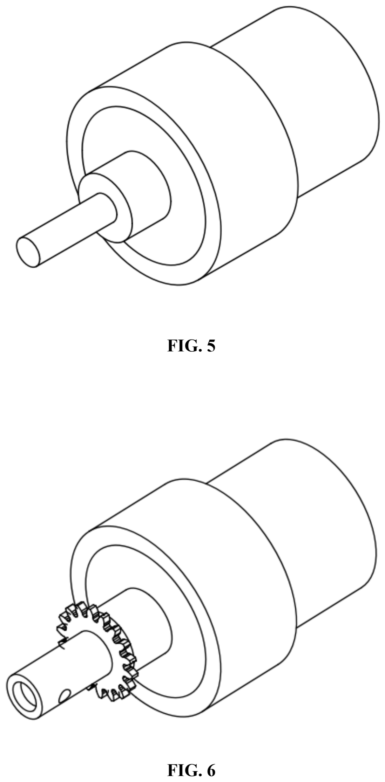

At step 302 of the method of the present disclosure, the central node 202 of the liquid handling system (LHS) obtains an input data comprising a recipe for a formulation, and one or more liquids. The central node 202 takes input of the set-up configuration (e.g., experimental set up) such as the number of active units, the recipe of the formulation along with the composition of the liquid ingredients and availability of the one or more liquids to process. FIG. 4, with reference to FIGS. 1 through 3, depicts the liquid handling system 100 of FIGS. 1 through 2, in accordance with an embodiment of the present disclosure. More specifically, various components, such as profiled driving racks, feedback rack, DC motor (also referred to as 'motor' and interchangeably used herein), potentiometer, potentiometer gear, idler gear, motor gear and the like are shown in FIG. 4. The gear box 208 is the centerpiece of the LHS 100 which houses different components like motor, syringe having plungers 210, potentiometer 212, and internal gears and racks to achieve the function/method of the present disclosure. Actuator (DC Motor): To drive the entire LHS an input driving torque is supplied using the DC motor with 30 rpm at 2 kg-cm torque FIG. 5. More specifically, FIG. 5, with reference to FIGS. 1 through 4, depicts a motor 206 comprised in the LHS 100 of FIGS. 1-2, in accordance with an embodiment of the present disclosure. This motor 206 is fixed on the top face of the gearbox using a nut (e.g., hexagonal nut) that is tightened inside a cavity (e.g., a hexagonal cavity of the face - not shown in FIGS.) to keep the motor 206 in place. Driving voltage for this DC motor 206 is being supplied by the motor controller based on the set speed calculated using the PI controller as performed in step 308. A gear is fixed to the motor (also referred to as a motor gear). More specifically, the gear is attached to the axel of the motor 206 using a screw. The geometry of the gear is like usual involute spur gear FIG. 6. More specifically, FIG. 6, with reference to FIGS. 1 through 5, depicts the motor 206 with gear attached, in accordance with an embodiment of the present disclosure.

At step 304 of the method of the present disclosure, the central node 202 of the liquid handling system (LHS) determines quantity of the formulation to be prepared using the one or more liquids associated with the recipe.

At step 306 of the method of the present disclosure, the controller 204 serving as the one or more hardware processors 104 calculates (i) viscosity and an actual volume of the one or more liquids required for preparing the formulation based on an associated ingredient concentration, by using a liquid volume calculator, (ii) an error between a set point and the actual volume of the one or more liquids based on a current position of the LHS, and (iii) determine a set speed for a motor 206 based on the calculated error. The step 304 is better understood by way of following description:

Based on the composition and the quantity of the sample needs/formulation to be prepared, proportional quantities of components are calculated. And to prepare these quantities from ingredients/liquids corresponding quantities of base liquids are also calculated using unitary method as known in the art. For example, say, a recipe needs two components A and B at 1:3 for a 100ml mixture. This requires 25ml of A ang 75ml of B components. Now, say A and B can be prepared from their standard concentrated solution. For this system 100 calculates how much dilution needs to be done for each to meet the specification which was calculated similarly from the unitary method.

At step 308 of the method of the present disclosure, the system 100 generates a voltage signal for a motor 206 specific to the set speed for movement of the motor. The motor 206 is configured to serve as a driver for a gear box 208.

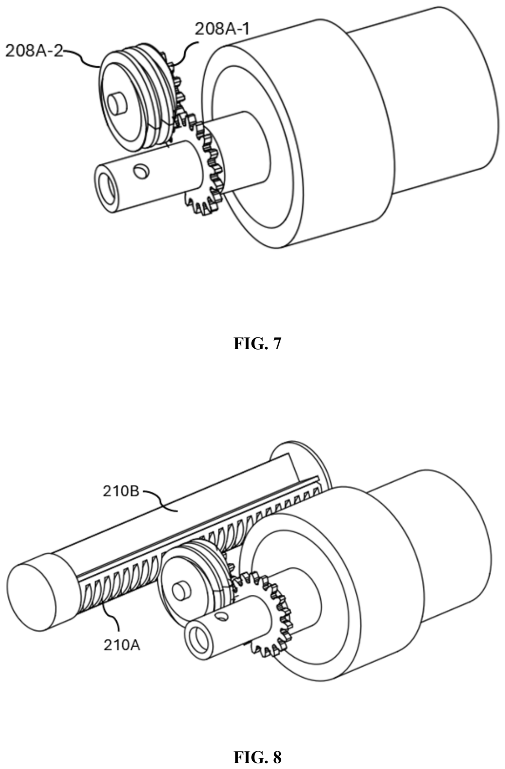

At step 310 of the method of the present disclosure, the gear box 208 generates torque and rotational motion based on a driving input received from the motor 206 and transmits the generated torque and rotational motion to an idler gear 208A using a first gear profile 208A-1. The driving input is generated using the voltage signal. The idler gear 208 is configured between the motor gear and plunger rack. The idler gear 208A has a twin profile with spur gear profile 208A-1 to mesh with the motor gear at top and a helical gear profile 208A-2 to mesh with the profiled driving rack 210A at the bottom as shown in FIG. 7.

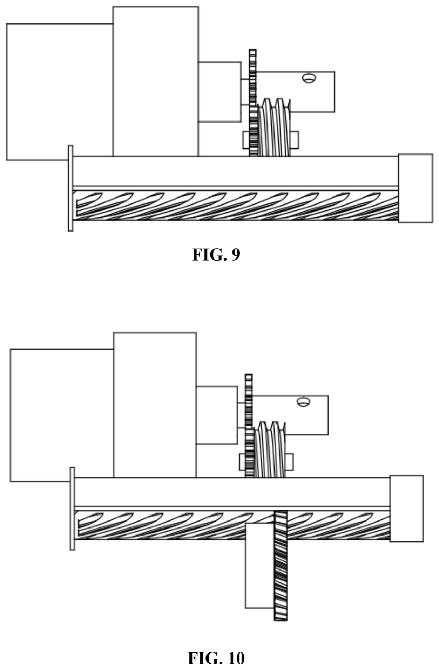

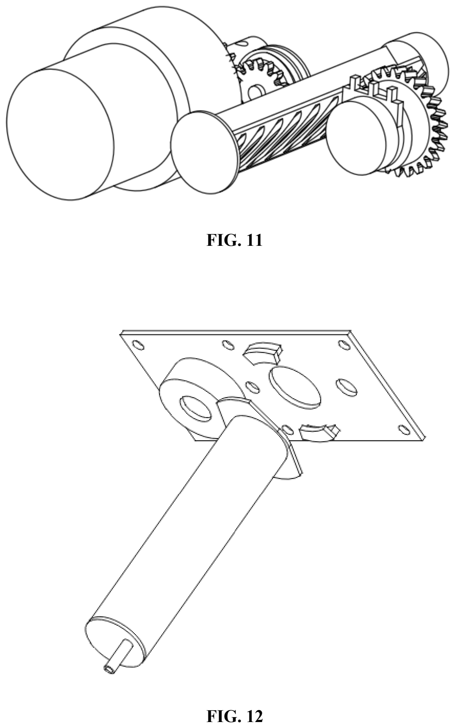

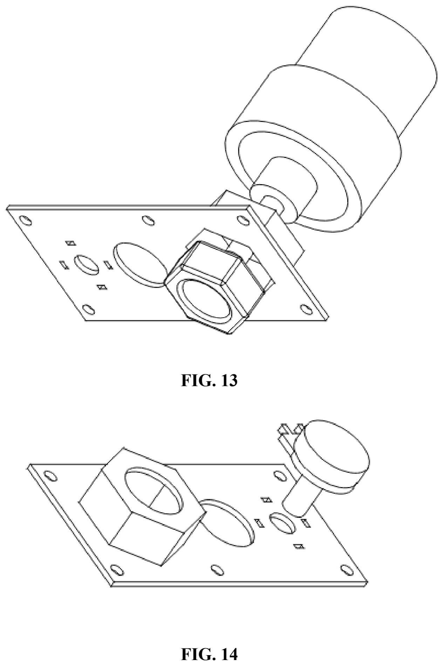

At step 312 of the method of the present disclosure, the idler gear 208A having a second gear profile 208A-2 meshed with a profiled driving rack 210A, generates a linear motion using the generated torque and rotational motion for movement of one or more plungers 210 associated with one or more syringes mounted to the LHS. The movement of one or more plungers 210 enables aspiration and dispensing of the one or more liquids by the LHS at a required amount for preparing the quantity of the formulation using the viscosity of the one or more liquids. More specifically, FIG. 7, with reference to FIGS. 1 through 6, depicts an idler gear attached to the motor 206 and a corresponding motor gear, in accordance with an embodiment of the present disclosure. On one side of the plunger cavity a rack (e.g., also referred to as driving rack) with a negative impression of the helical gear is fitted as shown in FIG. 8. More specifically, FIG. 8, with reference to FIGS. 1 through 7, depicts an exemplary plunger fitted with rack with a helical impression along with other gears and the motor 206, in accordance with an embodiment of the present disclosure. A negative impression refers to a representation of a void or recessed area where the shape has been removed or subtracted, like a mold or cavity that complements the original shape. Now, due to this meshing of the helical gear and the rack, rotation of helical gear in one direction generates a linear motion on the plunger thus converting torque to a force. To get feedback on the position of the plunger, another rack in the opposite cavity is fitted that includes a negative impression of the helical profile of the potentiometer 212 gear as shown in FIG. 9. The one or more plungers comprises a plurality of cavities 210B. The plurality of cavities is configured to house a plurality of profiled racks, wherein a first profiled rack is configured to drive the one or more plungers, and at least one second profiled rack is configured to provide the feedback signal. More specifically, FIG. 9, with reference to FIGS. 1 through 8, depicts a view of the other side of the plunger with another rack for feedback to the potentiometer 212, in accordance with an embodiment of the present disclosure. A first profiled rack is configured to drive the one or more plungers, and at least one second profiled rack is configured to provide the feedback signal. Further, gear of the potentiometer 212 (also referred to as potentiometer gear and interchangeably used herein (is meshed with the feedback rack of the plunger, as shown in FIG. 10. More specifically, FIG. 10, with reference to FIGS. 1 through 9, depicts a potentiometer gear meshed with the feedback rack, in accordance with an embodiment of the present disclosure. The arrangement of the potentiometer gear meshing with the feedback rack results in a proportional angular movement of the gear corresponding to the linear movement of the plunger. The potentiometer is a 3 terminal device as shown in FIG. 11 by way of example. More specifically. FIG. 11, with reference to FIGS. 1 through 10, depicts the potentiometer being attached with respective gear and rest of the gear assembly, in accordance with an embodiment of the present disclosure. The potentiometer generates a potential (also referred to as proportional voltage and interchangeably used herein) at the middle terminal (between the voltage difference of the rest two terminals) proportional to the angle of its knob on which the potentiometer gear is attached. This results in the potential proportional to the plunger position. This potential can be read by the MCU (e.g., microcontroller - also referred to as the controller/hardware processors 104 and interchangeably used herein) to enable appropriate action(s) to be taken accordingly. The MCU (Arduino Board) is a microcontroller that provides the controlling signals to the motor controller and monitors the feedback signal from the potentiometer to keep track of the plunger position. When the plunger is in close proximity to the set position, it gradually decreases the speed on the motor 206 and stops at the set position. As the microcontroller cannot provide the required current and voltage for the motor(s) 206, a motor controller is necessary. It takes the controlling signal and directly provides the driving power for the motor 206 from its power source without affecting the MCU. In other words, the proportional voltage value specific to the linear position of the one or more plungers 210 is read by the controller 204 as a feedback signal. Other than acting as the enclosure for all the components and keeping them in place, the gearbox also has some essential functions. For instance, the lower face provides the critical "rotate in place" mounting point for the syringe, shown in FIG. 12, for quick mounting or removal. More specifically, FIG. 12, with reference to FIGS. 1 through 11, depicts a view illustrating 'turn in place' geometry to fit body of the syringe on the bottom face of the gearbox, in accordance with an embodiment of the present disclosure. The top face holds the motor 206 in place using hexagonal cavity, as shown in FIG. 12, for motor nut screw which can be tightened to fix motor in place. More specifically, FIG. 13, with reference to FIGS. 1 through 12, depicts a top face with hexagonal geometry to mount the motor 206 using a hexagonal nut, in accordance with an embodiment of the present disclosure. The potentiometer for the feedback loop is also fitted in a slot and fixed on the top face, shown in FIG. 14, with a tightening nut. More specifically, FIG. 14, with reference to FIGS. 1 through 13, depicts the potentiometer mounting orientation on the top face of the gearbox, in accordance with an embodiment of the present disclosure.

The above steps of 306 through 312 are better understood by way of following description. The system 100 triggers a control loop for calculating a new controlling speed in every iteration from the error is calculated using a new position and setpoint values of the plungers/syringes. New target set values are communicated using a serial port which is checked after every 'm' executions (e.g., say 100 which is configurable and not limiting the scope of the present disclosure) of the control loop to allow finer control of the system. The system 100 continuously reads the serial port waiting for any inputs and when there is one, it is parsed as a text for further processing. The message from serial input is then analyzed for its type, by looking at the prefix. For instance, prefix may include but are not limited to A: To update active units, C: To check if the connection is still active, I: To check the status of LHS (Liquid Handling System), moving/stopped, L: To check the current level of the units, S: To set the new level of the units, and the like.

To get an estimate of the position of the plunger, which is coupled with the potentiometer, the input pins corresponding to each unit are read. The system 100 has mapping information stored in the database 108/memory 102 which includes details on one or more pins attached to one or more several units comprised in the system 100. A voltage signal (Vₚₒₜ) is then converted to the current level value using one or more pre-calculated calibration constant (K_{cal}) values, which is expressed as below: $Current Level = {K}_{cal} ∗ {V}_{pot} + C$
*K_{cal}: Calibration constant in range 0.015 to 0.025*
*C: Offset of linear relationship in range -1.5 to -2.5*

These calculated values of current plunger position are further used to calculate the errors in the next step. The controlling action here is based on the error from the set point values. Error is calculated based on the difference between set values and current values. $Error = Set Level - Current Level$

To control the speed of the motor 206, proportional control is being used here. The controlling variable (set speed) is used proportional (Kₚ) to the error value, which means that if the error is more, the value of the controlling variable will be more with a maximum limit. Now, to eliminate the steady state error where the error is so small that it is not able to move the syringe/plunger but still out of tolerance. To counter this, an integration term (K_{I}) in controlling variable is added, which accumulates over time when plunger is not moving and reaches a value where motors can move, and error is further reduced. $Set Speed = {K}_{P} ∗ Error + {K}_{I} ∗ {\sum }_{t = 0}^{t = present} Error$
Kₚ: Proportional Coefficient in range 0.0-15.0
K_{I}: Integral Coefficient in range 0.0-2.0
Error: Instantaneous error value calculated for the current time step.

This ensures the linear motion is proportional to the actual volume of the one or more liquids.

The system 100 further includes the potentiometer 212 that is operatively connected to the LHS 100 wherein the potentiometer 212 is configured to (i) receive an angular movement specific to the linear movement of the one or more plungers 210, and (ii) generate a proportional voltage value specific to a linear position of the one or more plungers 210 by using a calibration parameter (e.g., a configurable constant). The proportional voltage value specific to the linear position of the one or more plungers 210 is read by the controller 204 as a feedback signal.

The one or more syringes along with the one or more plungers, and the motor is construed (or formed) as a device that is mountable on (or connected to) the liquid handling system (LHS) 100. The device may further include the gear box, the idler gear having a first gear profile and a second gear profile meshed with a profiled driving rack. The device as described herein and depicted in FIGS. is operated (or configured for operation) with the linear motion using the generated torque and rotational motion for movement of the one or more plungers associated with the one or more syringes mounted to the LHS thus triggering aspiration and dispensation of the one or more liquids by the LHS at a required amount for preparing the quantity of the formulation using the viscosity of the one or more liquids. It is to be understood by a person having ordinary skill in the art that the device may be further configured with the potentiometer 212 that (i) receives an angular movement specific to the linear movement of the one or more plungers 210, and (ii) generates a proportional voltage value specific to a linear position of the one or more plungers 210 by using a calibration parameter (e.g., a configurable constant).

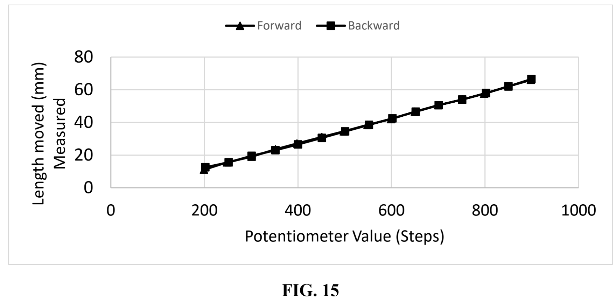

To test and validate the method and the LHS of the present disclosure, experiment(s) were carried out where setup was moved with 50 steps of voltage measured by the potentiometer feedback and then measured the actual length moved by the setup. FIG. 15, with reference to FIGS. 1 through 14, is a graphical representation illustrating measured position of the plunger with different set step values which are 50 steps apart, in accordance with an embodiment of the present disclosure. As depicted in the graphical representation of FIG. 15, the length moved by the plunger every 50 steps are linear which means the position of the plunger can be set by setting the corresponding linearly related potentiometer value. This also validates the working of the controller 204 which ensures that the system can reach the set point value correctly.

Due to the unavailability of a suitable liquid handling system, most of the available conventional solutions only deal with water-like solutions and such conventional systems fail to handle large viscosity range from water to other liquids/fluids (e.g., honey, etc.). To handle thick viscous liquids, the force required to aspirate and dispense is significantly higher than what is required for a watery liquid. Therefore, the suction setup and the actuators need to be much more powerful. For the equipment syringes were selected by the system 100 as they can handle wide viscosity range. But to drive these syringes a large linear force is required and to measure the force requirement. The force measurement was performed using a load cell using an appropriate set up. Below Table 2 depicts setup for measurement of drawing force (using a load cell) required for syringe with a testing liquid, by way of examples.

**Table 2**

| **Material** | **Force (kg)** | **Drawing Rate (ml/s)** |
|---|---|---|
| Empty | 1 | 5 |
| Water | 1.4 | 5 |
| Liquid Soap | 1.5 | 1.1 |
| Honey | 2 | 0.77 |

As can be seen in the Table 1, the maximum force experienced was 2 kg (~ 20 N) for honey. Thus, all other components like gears and rack were designed/configured and selected (e.g., DC motor) to generate this minimum force at the plunger. The system can be operated in a lab environment for a robotic arm for easy manipulation, due to its compact nature. To meet these criteria, the present disclosure utilized the space inside the syringe by placing 2 racks inside the plunger cavity which made the whole geometry compact making arrangement of these units in a grid for simultaneous handling of multiple liquids possible. As this setup is a part of an autonomous system it needs to be easily integrable into a central system that can digitally control the units, monitor their state as well as command aspiration and dispensing actions. For this purpose, a serial control functionality is configured (not shown in FIGS.) to send some serial messages to control or probe the state of the setup.

With the above experiments by the system 100 and the method of the present disclosure, the system 100 can handle a wide range of liquids with different viscosity, wherein the syringes with plunger configurations can be swapped as needed/required. The system 100 has a geometry that can be arranged in a grid for simultaneous multiple liquid handling. The system further seamlessly integrates with a central node 202 for real-time controlling and monitoring.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method, comprising:
obtaining, at a central node of a liquid handling system (LHS), an input data comprising a recipe for a formulation, and one or more liquids (302);
determining, by the central node, quantity of the formulation to be prepared using the one or more liquids associated with the recipe (304);
calculating, by using a controller, (i) viscosity and an actual volume of the one or more liquids required for preparing the formulation based on an associated ingredient concentration, by using a liquid volume calculator, (ii) an error between a set point and the actual volume of the one or more liquids based on a current position of the LHS, and (iii) determine a set speed for a motor based on the calculated error (306);
generating a voltage signal for the motor specific to the set speed for movement of the motor, wherein the motor is configured to serve as a driver for a gear box (308);
generating, by the gear box, torque and rotational motion based on a driving input received from the motor, and transmitting the generated torque and rotational motion to an idler gear using a first gear profile, wherein the driving input is generated using the voltage signal (310); and
generating, by using the idler gear having a second gear profile meshed with a profiled rack, a linear motion using the generated torque and rotational motion for movement of one or more plungers associated with one or more syringes mounted to the LHS, and wherein the movement of one or more plungers enable aspiration and dispensing of the one or more liquids by the LHS at a required amount for preparing the quantity of the formulation using the viscosity of the one or more liquids (312).

2. The processor implemented method as claimed in claim 1, wherein the linear motion is proportional to the actual volume of the one or more liquids.

3. The processor implemented method as claimed in claim 1, wherein a potentiometer is operatively connected to the LHS and is configured to (i) receive an angular movement specific to the linear movement of the one or more plungers, and (ii) generate a proportional voltage value specific to a linear position of the one or more plungers by using a calibration parameter, and wherein the proportional voltage value specific to the linear position of the one or more plungers is read by the controller as a feedback signal.

4. The processor implemented method as claimed in claim 3, wherein one or more updated errors are estimated using the feedback signal for determining one or more updated set speeds and one or more subsequent linear positions of the one or more plungers that enable further aspiration and dispensing of the one or more liquids.

5. The processor implemented method as claimed in claim 3, wherein the one or more plungers comprises a plurality of cavities that are configured to house a plurality of profiled racks, and wherein a first profiled rack is configured to drive the one or more plungers, and at least one second profiled rack is configured to provide the feedback signal.

6. A liquid handling system (LHS) (100), comprising:
a memory (102) storing instructions;
one or more communication interfaces (106); and
a central node (202) configured to obtain an input data comprising a recipe for a formulation, and one or more liquids and determine quantity of the formulation to be prepared using the one or more liquids associated with the recipe;
a controller (204) configured to calculate (i) viscosity and an actual volume of the one or more liquids required for preparing the formulation based on an associated ingredient concentration, by using a liquid volume calculator, (ii) an error between a set point and the actual volume of the one or more liquids based on a current position of the LHS, and (iii) determine a set speed for a motor based on the calculated error;
a motor (206) configured to generate a voltage signal specific to the set speed for movement of the motor (206), wherein the motor (206) is configured to serve as a driver for a gear box (208), wherein the gear box (208) is configured to generate torque and rotational motion based on a driving input received from the motor (206), and transmit the generated torque and rotational motion to an idler gear (208A) using a first gear profile (208A-1), wherein the driving input is generated using the voltage signal, wherein the idler gear (208A) further comprises a second gear profile (208A-2) meshed with a profiled driving rack (210A) and is configured to generate a linear motion using the generated torque and rotational motion for movement of one or more plungers (210) associated with one or more syringes mounted to the LHS, and wherein the movement of one or more plungers (210) enable aspiration and dispensing of the one or more liquids by the LHS at a required amount for preparing the quantity of the formulation using the viscosity of the one or more liquids.

7. The system as claimed in claim 6, wherein the linear motion is proportional to the actual volume of the one or more liquids.

8. The system as claimed in claim 6, wherein a potentiometer (212) is operatively connected to the LHS (100) and is configured to (i) receive an angular movement specific to the linear movement of the one or more plungers (210), and (ii) generate a proportional voltage value specific to a linear position of the one or more plungers by using a calibration parameter, and wherein the proportional voltage value specific to the linear position of the one or more plungers is read by the controller (204) as a feedback signal.

9. The system as claimed in claim 8, wherein one or more updated errors are estimated using the feedback signal for determining one or more updated set speeds and one or more subsequent linear positions of the one or more plungers (210) that enable further aspiration and dispensing of the one or more liquids.

10. The system as claimed in claim 8, wherein the one or more plungers (210) comprises a plurality of cavities (210B) that are configured to house a plurality of profiled racks, and wherein a first profiled rack is configured to drive the one or more plungers, and at least one second profiled rack is configured to provide the feedback signal.

11. A device, comprising:
one or more plungers (210) associated with one or more syringes mountable to a liquid handling system (LHS) (100); and
a motor (206) configured to generate a voltage signal specific to a set speed for movement of the motor (206), wherein the motor (206) is configured to serve as a driver for a gear box (208),
wherein the gear box (208) is configured to generate torque and rotational motion based on a driving input received from the motor (206), and transmit the generated torque and rotational motion to an idler gear (208A) using a first gear profile (208A-1),
wherein the driving input is generated using the voltage signal,
wherein the idler gear (208A) further comprises a second gear profile (208A-2) meshed with a profiled driving rack (210A) and is configured to generate a linear motion using the generated torque and rotational motion for movement of the one or more plungers (210) associated with the one or more syringes mounted to the LHS, and
wherein the movement of one or more plungers (210) enable aspiration and dispensation of the one or more liquids by the LHS at a required amount for preparing the quantity of the formulation using the viscosity of the one or more liquids.

12. One or more non-transitory machine-readable information storage mediums comprising one or more instructions which when executed by one or more hardware processors cause:
obtaining, at a central node of a liquid handling system (LHS), an input data comprising a recipe for a formulation, and one or more liquids ;
determining, by the central node, quantity of the formulation to be prepared using the one or more liquids associated with the recipe ;
calculating, by using a controller, (i) viscosity and an actual volume of the one or more liquids required for preparing the formulation based on an associated ingredient concentration, by using a liquid volume calculator, (ii) an error between a set point and the actual volume of the one or more liquids based on a current position of the LHS, and (iii) determine a set speed for a motor based on the calculated error ;
generating a voltage signal for the motor specific to the set speed for movement of the motor, wherein the motor is configured to serve as a driver for a gear box ;
generating, by the gear box, torque and rotational motion based on a driving input received from the motor, and transmitting the generated torque and rotational motion to an idler gear using a first gear profile, wherein the driving input is generated using the voltage signal ; and
generating, by using the idler gear having a second gear profile meshed with a profiled rack, a linear motion using the generated torque and rotational motion for movement of one or more plungers associated with one or more syringes mounted to the LHS, and wherein the movement of one or more plungers enable aspiration and dispensing of the one or more liquids by the LHS at a required amount for preparing the quantity of the formulation using the viscosity of the one or more liquids .

13. The one or more non-transitory machine-readable information storage mediums as claimed in claim 12, wherein the linear motion is proportional to the actual volume of the one or more liquids.

14. The one or more non-transitory machine-readable information storage mediums as claimed in claim 12, wherein a potentiometer is operatively connected to the LHS and is configured to (i) receive an angular movement specific to the linear movement of the one or more plungers, and (ii) generate a proportional voltage value specific to a linear position of the one or more plungers by using a calibration parameter, and wherein the proportional voltage value specific to the linear position of the one or more plungers is read by the controller as a feedback signal.

15. The one or more non-transitory machine-readable information storage mediums as claimed in claim 14, wherein one or more updated errors are estimated using the feedback signal for determining one or more updated set speeds and one or more subsequent linear positions of the one or more plungers that enable further aspiration and dispensing of the one or more liquids, wherein the one or more plungers comprises a plurality of cavities that are configured to house a plurality of profiled racks, and wherein a first profiled rack is configured to drive the one or more plungers, and at least one second profiled rack is configured to provide the feedback signal.
